# EUROPEAN PATENT APPLICATION

(11) **EP 4 811 269 A1**
(43) Date of publication of application: **23.09.2026**
(21) Application number: 25221595.9
(22) Date of filing: 08.12.2025
(51) Int. Cl.: G06T 1/20, G06T 3/40

(54) **DISTRIBUTED IMAGE SCALING**

(30) Priority: 21.03.2025 US 202519086497
(71) Applicant: INTEL Corporation, Santa Clara, CA 95054 (US)
(72) Inventor: POSSOS, Sebastian, Sammamish, WA 98074 (US); CHIU, Yi-Jen, San Jose, CA 95129 (US); WANG, Yi-Chu, Santa Clara, CA 95051 (US)
(74) Representative: HGF

(57) **Abstract**

Image scaling processes that work on an entire region of interest at once or in a serial manner can be computationally expensive and slow, especially for high-resolution images. To address this issue, distributed image scaling can be performed to improve real-time performance. Distributed image scaling involves dividing a region of interest of an image into sub-regions and scaling them in parallel using multiple scaler cores. The workloads to the parallel scaler cores include precise alignment information to avoid artifacts at sub-region boundaries in the scaled image.

## Description

### Background

Video processing is a pervasive technology, seamlessly integrating into numerous domains of digital technology and artificial intelligence. From smartphone cameras that instantaneously apply computational photography techniques to advanced machine learning models that can detect objects, track movement, and recognize complex visual patterns, video processing plays a big role in modern technology.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates a scaler being used with one or more exemplary downstream consumers, according to some embodiments of the disclosure.
FIG. 2 illustrates an image and a region of interest, according to some embodiments of the disclosure.
FIG. 3 illustrates a graphics processing unit, according to some embodiments of the disclosure.
FIG. 4 illustrates a sub-region and a further sub-region of the region of interest, according to some embodiments of the disclosure.
FIG. 5 illustrates distributed scaling of a region of interest, according to some embodiments of the disclosure.
FIG. 6 illustrates distributed scaling of a sub-region and a further sub-region of the region of interest, according to some embodiments of the disclosure.
FIG. 7 illustrates an exemplary scaling filter, according to some embodiments of the disclosure.
FIG. 8 illustrates a sub-region and a further sub-region of the region of interest, according to some embodiments of the disclosure.
FIG. 9 depicts a flow diagram illustrating a method for distributed image scaling, according to some embodiments of the disclosure.
FIG. 10 depicts a block diagram of an exemplary computing device, according to some embodiments of the disclosure.

### Detailed Description

### Overview

Image scaling processes that work on an entire region of interest at once or in a serial manner can be computationally expensive and slow, especially for high-resolution images. 1080p images can have a resolution of 1920x1080 pixels. 2K images can have a resolution of 2048x1080 pixels. 1440p images can have a resolution of 2560x1440 pixels. 2160p images can have a resolution of 3840x2160 pixels. 4K images can have a resolution of 4096x2160 pixels. 5K images can have a resolution of 5120×2880 pixels. 8K images can have a resolution of 7680×4320 pixels. Some systems may involve single-pass scaling, which processes the entire image in a serial manner. Single-pass scaling is inefficient for large-scale, high-resolution images. In systems with multiple scaler cores, the serial nature of single-pass scaling can lead to underutilization of hardware resources, limiting overall scalability and throughput. In particular, these systems lack the ability to perform scaling of different parts of an image in parallel efficiently and effectively, limiting scalability and speed improvements. One complication is that the scaling factor can be a non-integer and is not always known a priori. The scaling process can be a bottleneck for real-time or large-scale processing applications.

To address this issue, distributed image scaling can be performed to improve real-time performance. Distributed image scaling involves dividing a region of interest of an image into sub-regions and scaling them in parallel using multiple scaler cores. The region of interest can have an arbitrary size, and the scaling factor can be arbitrary. The technical task involves determining precise alignment information for scaling the sub-regions to ensure that the boundaries or transitions between the sub-regions in the scaled image are free of artifacts while keeping computational overhead low. The workloads to the scaler cores include precise alignment information enable the individual scaler cores to effectively produce sub-regions of the scaled image in parallel.

Image scaling efficiency and effectiveness are improved by dividing the region of interest of an image into multiple sub-regions. The division can be performed vertically and/or horizontally. The scaling for the sub-regions can be performed by individual scaler cores in parallel. The outputs of the scaler cores can be written back to memory at suitable locations to form the final scaled image.

Precise alignment information is determined for a sub-region to ensure that a scaler core has sufficient pixel data for interpolation and offset information for aligned sampling of the pixel data and that the scaled image is artifact-free and consistent across sub-region boundaries. The precise alignment information enable the parallel scaler cores to produce results indistinguishable from systems implementing a single-pass scaling process.

In some embodiments, a processor having multiple scaler cores may receive a request to scale a region of interest of an image from an original dimension to a scaled dimension. The region of interest may represent a subset of pixels of the image. The original dimension may have an arbitrary size. The scaled dimension may be a size specified by a downstream consumer of a scaled image. When the original dimension of the region of interest exceeds the capacity or supported dimension of a scaler core, the processor may divide the region of interest into one or more sub-regions and produce one or more separate workloads for scaling the one or more sub-regions. The workloads can be scheduled and distributed to the scaler cores for independent or parallel processing. The sub-regions may share an overlap region where the sub-regions may overlap each other. A scaler core may retrieve from memory and store a copy of a sub-region for processing.

In some embodiments, the processor may determine a scaling factor based on the original dimension and the scaled dimension. The scaling factor can be taken into account in the determination of precise alignment information. The scaling factor can be a ratio between the original dimension and the scaled dimension. The scaling factor can be a fractional number.

In some embodiments, the processor may determine an overlap size of the sub-regions (e.g., how much the sub-regions overlap at the transition between sub-regions) based on the scaling factor and a number of taps of a scaling filter. In some cases, the overlap size is a fixed number. In some cases, the overlap size may differ depending on the scaling filter and the scaling factor. The overlap size can be calculated based on the number of taps and adjusted for the scaling factor to ensure that a scaler core performing scaling of a sub-region has enough pixels for artifact-free interpolation.

In some embodiments, the processor may determine an aligned position based on one or more of: an end position of a previous sub-region, the overlap size, and the scaling factor. The aligned position can be calculated based on an end position of a previous sub-region (which may correspond to a last line or column that was processed for the sub-region). The aligned position can be used to ensure that the sub-region is aligned correctly to the previous sub-region in accordance with the scaling factor. The aligned position can be aligned with respect to the last processed line or column of the previous sub-region.

In some embodiments, the processor may determine an offset based on one or more of: the aligned position, the scaling factor, and the overlap size. The offset may be used to align the aligned position according to the scaling factor. The offset can be used to determine a center of the scaling filter (e.g., specifying where to begin filtering for the next sub-region and producing output pixels for the scaled image) to ensure that distributed scaling of the image maintains consistency with a result of a single-pass process. The offset can be used to derive integer offset (the integer component of the offset) and integer phase (the fractional component of the offset) to allow the scaling filter to perform discrete sampling. The offset may be used to adjust or determine weights of the taps of the scaling filter to enable discrete sampling.

The processor may partition or divide a region of interest into a sub-region and a further sub-region. In some embodiments, the processor may generate a workload for scaler core to scale the further sub-region of the region of interest. The workload may be generated based on the precise alignment information, which may be determined based on the (previous) sub-region. For instance, the workload may include a memory address to read pixel data for scaling the further sub-region. The workload may be generated based on an aligned position for the further sub-region. The workload may be generated based on an offset calculated for the further sub-region, which may be determined based on the aligned position and the scaling factor. For instance, the workload may specify a center of a scaling filter based on the offset. In another instance, the workload may specify filter tap weights of the scaling filter, where the weights are determined based on the offset. The processor may generate a further workload for a further scaler core to scale the (previous) sub-region of the region of interest. The processor may create different threads for the scaler cores to instruct the scaler cores to scale respective sub-regions of the region of interest.

Effective distributed image scaling can be valuable to systems with multiple scaler cores operating with high-resolution images in delivering real-time performance, seamless quality, and improved scalability. Distributed image scaling can significantly reduce processing time for image scaling tasks, enabling faster real-time processing for large-scale images, particularly at resolutions of 4K, 5K, 8K and beyond. In systems equipped with multiple scalers, scalability and utilization are improved by distributing workloads efficiently across available hardware. Distributed image scaling enables high-resolution content to be processed concurrently, reducing bottlenecks and enabling seamless operation in demanding applications like live streaming, adaptive bitrate encoding, and cloud-based video processing.

By precisely calculating and applying the alignment information for sub-regions (whether divided vertically and/or horizontally), scaling for different sub-regions can be performed independently and in parallel by different processing cores. Once the outputs of the processing cores are appended together, the final scaled image is seamless and identical to that of a single-pass scaling process. Dividing or partitioning a region of interest into multiple vertical and/or horizontal regions enables scalable, distributed processing. The alignment position and offset calculations ensure proper alignment across neighboring sub-regions, maintaining consistency and eliminating artifacts at the boundaries between sub-regions.

For machine learning inference tasks, it is valuable to produce scaled images as close as possible to those generated by one-pass scalers, which can be used for training machine learning models. This consistency and artifact-free results can be important machine learning inference pipelines, where scaled images preferably accurately and closely match those generated by one-pass scalers (or have the fidelity of or be consistent with high-quality training images) to ensure reliable predictions. Consistent and artifact-free distributed scaling can maintain visual and statistical fidelity of images, which means that the distribution scaling solution can be used effectively and reliably for machine learning inference.

This approach is particularly powerful in systems with multiple scaler cores (which may have been used previously to perform parallel processing of different images or different video streams, and not parts of a single image). Scaling of a region of interest can be distributed as separate workloads across the hardware (or threads) to achieve significant scalability and high throughput. Each scaler core can process an assigned sub-region and produce a part of the scaled image while maintaining alignment with neighboring sub-regions, ensuring that the final scaled image is seamless and identical to a single-pass scaling process. This flexibility is valuable for high-performance environments, such as 4K/5K/8K video encoding pipelines, where both speed and quality are some important factors.

Distributed image scaling techniques described and illustrated herein can be implemented on distributed computing systems and processors with multiple processing cores, allowing sub-regions to be processed concurrently. In some implementations, multi-thread execution of scaling for sub-regions can achieve distributed image scaling. In some implementations, parallel workloads for sub-regions can be scheduled to be executed by parallel processing cores, processing devices, or computing devices to achieve distributed image scaling. Implementing efficient and effective distributed image scaling can significantly reduce overall processing time while maintaining high-quality results.

### Scaling for downstream consumers

Resizing (or scaling) of an image is often performed for training and inferencing of machine learning models that take images or videos as input. There are a variety of resizing algorithms that are intended for different purposes and can achieve different results. A downstream consumer may include a playback application. Playback applications may have requirements associated with human visual systems. Another downstream consumer may be used in machine learning inference tasks. Machine learning inference applications such as computer vision tasks, may achieve higher inference accuracy with consistent, artifact-free images.

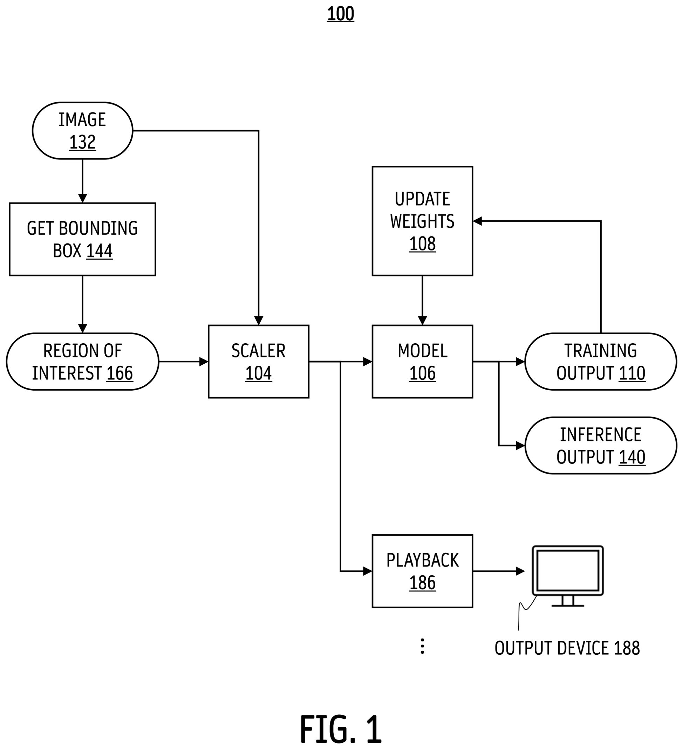

FIG. 1 illustrates scaler 104 being used with one or more exemplary downstream consumers, according to some embodiments of the disclosure. FIG. 1 depicts components and data of system 100.

In a model training process, one or more images 132 may be provided as input to scaler 104. The one or more images 132 may be part of one or more videos. Scaler 104 may implement a resizing algorithm, or a scaling algorithm to produce one or more resized images. Scaler 104 can take one or more images 132 of one dimension and produce one or more scaled images of a different dimension, either larger or smaller. Scaler 104 may scale one or more images 132 in an x-dimension and/or a γ-dimension. Scaler 104 can implement a scaling algorithm by determining new pixel values for the scaled image based on pixels of the original image.

One or more resized images produced by scaler 104 may be provided as input to model 106. Scaler 104 may be used because model 106 expects input images of a certain dimension (or size). Scaler 104 may be used to limit the amount of input data that model 106 has to process. Scaler 104 may be used to limit the amount of memory usage for running model 106.

Model 106 may be a machine learning model, such as a deep learning model. An example of model 106 is a convolutional neural network (CNN) (or other suitable neural networks used for processing images). Model 106 may include layers such as convolutional layers, activation functions, pooling layers, fully connected layers, and SoftMax layers. Other examples of model 106 may include vision transformers, attention-based architectures, generative adversarial networks, autoencoders, encoder-decoder models, recurrent neural networks, ensemble models, temporal convolutional neural networks, graph-based neural networks, etc.

Model 106 may undergo the model training process to perform one or more inferencing tasks. Examples of inferencing tasks include image classification, object detection, image segmentation, face recognition, image generation, style transfer, image restoration, inpainting, super-resolution, image compression, optical character recognition, spatial model reconstruction, image registration/alignment, image compression, feature extraction, image captioning, and image coloration.

As part of the model training process, one or more scaled images produced from training data by scaler 104 may be provided as input into model 106 to carry out forward propagation. Model 106 may produce one or more training outputs 110 in response to receiving the one or more scaled images. Update weights 108 may perform loss calculation by comparing one or more training outputs 110 to ground truth of the training data. Update weights 108 may perform backpropagation by computing gradients of the loss with respect to parameters in model 106. Update weights 108 may update one or more parameters (such as weights and biases) in model 106 according to an optimization algorithm, such as stochastic gradient descent.

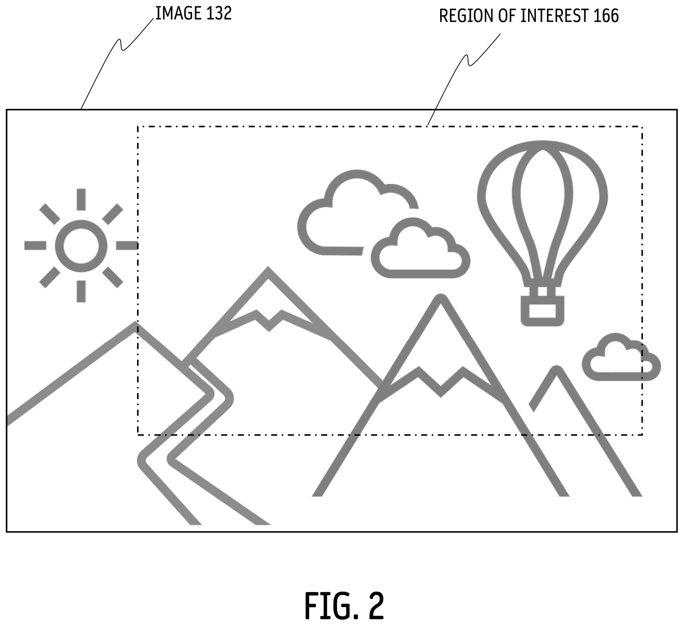

In an inferencing process, one or more images 132 may be processed by get bounding box 144 to identify region of interest 166 of an image of one or more images 132. Get bounding box 144 may implement computer vision algorithms and/or deep learning algorithms to produce region of interest 166. An exemplary image is depicted in FIG. 2. Exemplary region of interest 166 is depicted in FIG. 2. Referring back to FIG. 1, get bounding box 144 may identify region of interest 166, such as a region that has salient objects or features of interest for a downstream consumer (e.g., detected objects, detected faces, detected anomalies, detected road users, detected defects, etc.). Region of interest 166 may be specified by a bounding box. The bounding box can be specified using four coordinates (e.g., Xmin, Ymin, Xmax, and Ymax), or two coordinates, a height, and a width (e.g., Xmin, Ymin, H, and W). Region of interest 166 may represent a subset of pixels of the image. In some cases, region of interest 166 may represent the full image. Region of interest 166 may have an arbitrary dimension. The dimension may be unknown a priori. Get bounding box 144 allows a cropped region of interest 166 to be consumed by the downstream consumer and discards (uninteresting) information outside of region of interest 166. Obtaining region of interest 166 by get bounding box 144 can allow the downstream consumer to focus on a part of the image as opposed to the entire image.

In the inferencing process, a cropped image or pixels in region of interest 166 may be scaled by scaler 104. Scaler 104 may scale region of interest 166 from an original dimension to a scaled dimension to produce a scaled image. Scaler 104 may perform scaling because model 106 expects input images of a certain dimension (or size). In some cases, one system may implement scaling in the model training process, and a different system may implement scaling in the inferencing process.

One or more scaled images produced by scaler 104 may be input into (trained) model 106. In response to receiving the one or more scaled images, model 106 may perform one or more inferencing tasks to generate one or more inference outputs 140. Model 106 may be a downstream consumer that is downstream of scaler 104.

In some scenarios, the system that is running model 106 for inferencing may include one or more other downstream consumers. In other words, the system may have several downstream consumers that are downstream of scaler 104 (or a system that implements scaling). Playback 186 may be an example of a downstream consumer of scaler 104. Playback 186 may process the one or more scaler images from scaler 104 for rendering or output on output device 188.

Other examples of a downstream consumer may include video editing application, video or image previewer application, video or image creator application, signal processing application, video encoder, transcoding application, video analytics application, video summarization, video segmentation, video action segmentation, scene change detection, people counting, and surveillance application.

For many downstream consumers, the quality of scaled images produced by scaler 104 can be important for the performance of the downstream consumer.

Misalignment artifacts are usually visible to the end user, which can mean that the objective and subjective quality of displayed images would suffer.

In one experiment of a distributed scaler that does not perform precise alignment calculations, the scaled image exhibited severe pixel misalignments. The misalignment impacted quality metrics such as structural similarity index measure (SSIM) and Peak Signal-to-Noise Ratio (PSNR). Quality measurement tools can interpret the artifacts and pixel misalignments as genuine quality loss and metric degradation, leading to a significant drop in calculated quality scores. An encoder may allocate unnecessary bitrate or prioritize regions for quality improvement that do not require it, thereby wasting resources. Artifacts and pixel misalignment can reduce the encoder's ability to achieve optimal compression, because the encoder would account for false discontinuities at boundaries. By eliminating these misalignment artifacts, the final scaled image help ensure accurate quality measurements downstream and allows the encoder to make optimal decisions for quality improvement. Having a high-quality scaled image can be particularly valuable in high-resolution workflows (e.g., involving 4K, 5K, and 8K images), where precise scaling consistency directly affects overall encoding efficiency and output quality.

For machine learning downstream consumers (e.g., model 106), it is valuable for scaler 104 to produce scaled images that are consistency and artifact-free to ensure reliable predictions. Model 106 may depend on scaler 104 to produce scaled images with high visual and statistical fidelity to ensure that model 106 can operate effectively and reliably for machine learning inference.

### A processor with multiple scaler cores

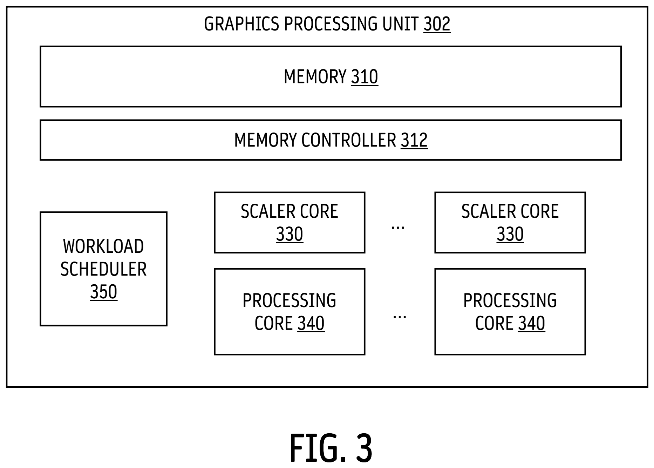

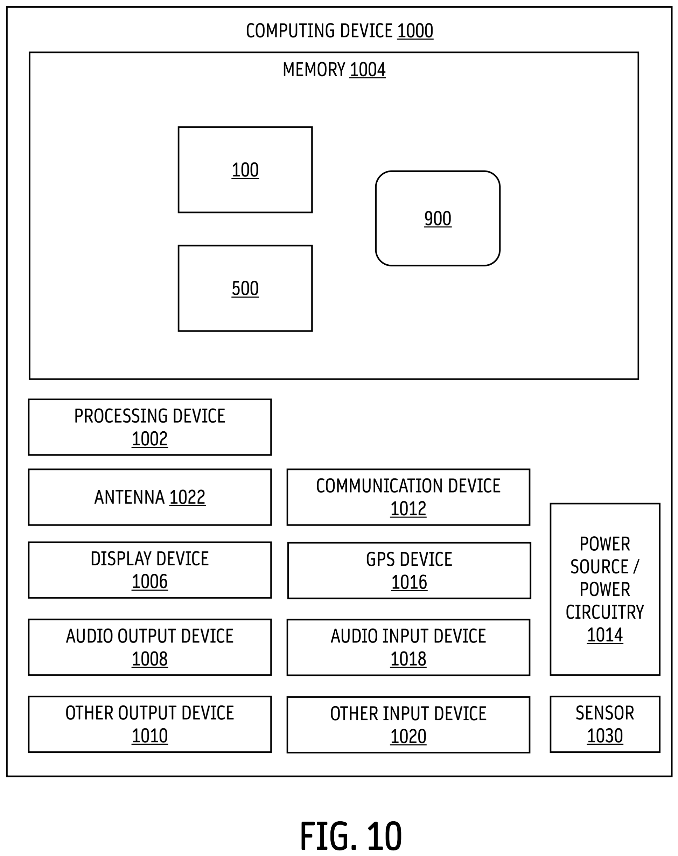

FIG. 3 illustrates graphics processing unit (GPU) 302, according to some embodiments of the disclosure. GPU 302 is an example of a processor with multiple scaler cores. It is envisioned that distributed image scaling may be implemented on other types of processors with multiple scaler cores (e.g., a processing device 1002 of FIG. 10).

GPU 302 can include components optimized for graphics processing, such as perform rescaling operations and other computational tasks. A GPU leverages parallel processing capabilities to achieve high-performance for graphics and general-purpose computing. GPU 302 may include one or more of: memory 310, memory controller 312, workload scheduler 350, one or more scaler cores 330, and one or more processing cores 340.

Memory 310 can serve as the primary storage for the GPU 302, holding input data, intermediate results, and output data for operations performed by GPU 302. Memory 310 can include high bandwidth memory to store data such as images, parameters for operations, processed image. Memory 310 can be optimized for parallel access patterns typical in graphics workloads, enabling multiple processing cores/engines of GPU 302 to simultaneously retrieve or store data.

Memory controller 312 may data flow between the memory 310 and processing cores of GPU 302. Memory controller 312 can orchestrate memory read and write operations, ensuring efficient bandwidth utilization while handling multiple concurrent memory access requests from the various cores of GPU 302.

GPU 302 may include one or more processing cores, including one or more of: parallel scaler cores 330 and processing cores 340. The processing cores may cooperate to perform various image processing tasks, workflows, and pipelines within GPU 302.

Parallel scaler cores 330 can include specialized processing units optimized and designed specifically for image scaling operations. These cores implement various scaling algorithms and filters in hardware, enabling efficient up-sampling and down-sampling of images and video frames. Parallel scaler cores 330 can support one or more interpolation methods including, but not limited to, nearest neighbor, bilinear, bicubic, and Lanczos filtering techniques, enabling high-quality rescaling while maintaining computational efficiency.

Processing cores 340 comprise general-purpose or graphics-specific computation units capable of executing a wide range of operations. Processing cores 340 can perform pre-processing and post-processing operations associated with image processing, such as color space conversion, filtering, and image enhancement. Processing cores 340 can execute shader programs (vertex shaders, pixel shaders, etc.) other computational kernels. Processing cores 340 can implement operations of neural networks, such as matrix multiplications and convolution. Processing cores 340 can implement scaling algorithms and functions.

Workload scheduler 350 may serve as the central coordination unit for GPU 302. Workload scheduler 350 can allocate tasks/workloads across available parallel scaler cores 330 and processing cores 340. In some embodiments, workload scheduler 350 may receive and/or analyze a request to scale a region of interest of an image from an original dimension to a scaled dimension. Workload scheduler 350 can determine a suitable or optimal execution strategies and generate one or more workloads for parallel scaler cores 330 and/or processing cores 340. and manages workload distribution to maximize throughput and minimize latency. Workload scheduler 350 can implement a scheduling algorithm that considers factors such as data dependencies, resource availability, and processing priorities to ensure efficient utilization of the processing cores. Workload scheduler 350 can handle input and/or output synchronization between processing cores. Workload scheduler 350 can ensure that memory addresses are correctly computed for the processing cores to read data from memory 310 and/or to write data to memory 310. Workload scheduler 350 can divide or partition the region of interest into one or more sub-regions for parallel processing by parallel scaler cores 330.

### Dividing or partitioning a region of interest into sub-regions and scaling in parallel

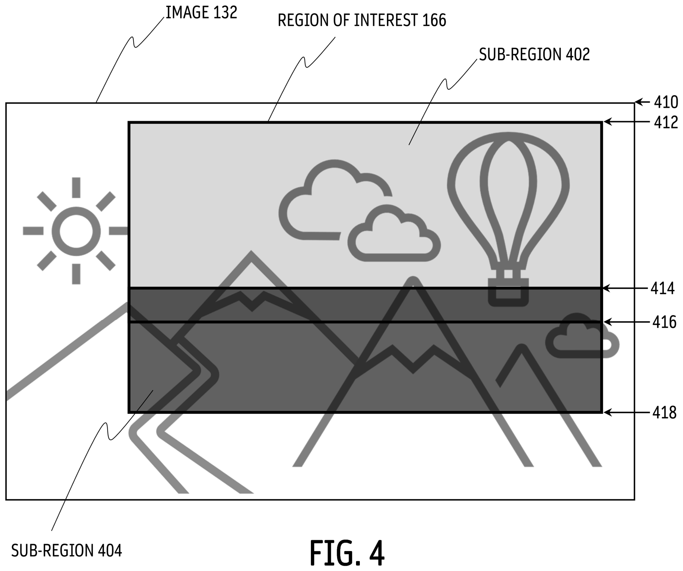

FIG. 4 illustrates sub-region 402 and sub-region 404 of region of interest 166, according to some embodiments of the disclosure. In response to determining that parallel processing using multiple scaler cores to scale region of interest 166 may be desired, region of interest 166 can be divided or partitioned into one or more sub-regions, shown as sub-region 402 and sub-region 404, vertically. Region of interest 166 may be divided or partitioned into two or more sub-regions. Sub-region 402 and sub-region 404 may overlap each other, or have an overlap region at the transition between sub-region 402 and sub-region 404.

Position 410 represents a position of a first line of pixels of image 132. Position 412 represents a position of a first line of pixels of region of interest 166 and a position of a first line of pixels of sub-region 402. Position 414 represents a position of a first line of pixels of sub-region 404. Position 416 represents a position of a last line of pixels of sub-region 402. Position 418 represents a position of a last line of pixels of sub-region 404. The area between position 414 and position 416 represents an overlap region of the sub-region 404 and sub-region 402. The overlap region represents pixels to be used by respective scaler cores for interpolation when scaling sub-region 402 and when scaling sub-region 404.

Distributed image scaling of region of interest 166 to produce a scaled image based on sub-region 402 and sub-region 404 involves sending one workload to a scaler core to generate a part, portion, or region of a scaled image corresponding to sub-region 402, and sending a further workload to a further scaler core to generate a further part, portion, or region of the scaled image corresponding to sub-region 404. The scaler cores can write output pixels for the respective parts of scaled image directly to a memory to form the scaled image in memory without additional filtering at the boundary between parts of the scaled image.

Generating the distributed workloads that would result in a scaled image that would match a scaled image produced in a single-pass is not trivial. The workloads are generated based on precise alignment information. Precise alignment information ensures that a scaler core has sufficient pixel data for interpolation at the boundary and offset information for aligned sampling of the pixel data to avoid misalignment artifacts. The resulting scaled image that is composed of outputs produced by respective scaler cores can be artifact-free and consistent across sub-region boundaries, making the results indistinguishable from systems implementing single-pass scaling.

To produce the scaled image that is artifact-free at the boundary between sub-region 402 and sub-region 404 of FIG. 4, FIGS. 5-7 describe an exemplary distributed scaling system and calculations for determining alignment information being used to generate the workloads for parallel processing. The calculations ensure that the boundaries between sub-regions are aligned correctly, avoid artifacts, and maintain consistency across the boundaries between sub-regions. The calculations ensure that the scaler core knows how to perform interpolation (where to start interpolation and where to sample) for the next sub-region in a manner that is aligned with where interpolation ended for the previous sub-region.

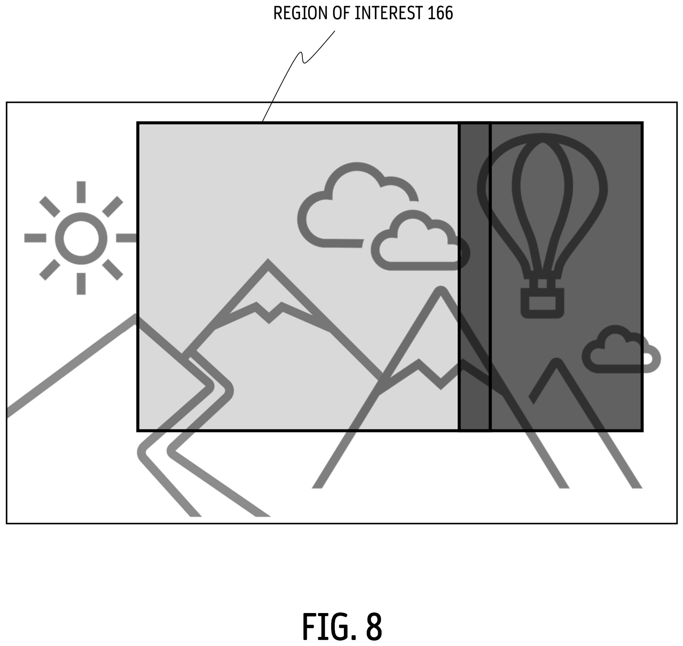

The calculations illustrate calculating alignment information between sub-regions through a unified approach that is applicable to both the vertical and horizontal dimensions. For simplicity, some passages herein are focused on alignment information calculations along the vertical dimension at the boundary between sub-region 402 and sub-region 404. It is envisioned that alignment information may be calculated for additional boundaries. It is envisioned that alignment information may be calculated along a horizontal dimension at a boundary between sub-regions created by dividing or partitioning region of interest 166 horizontally (illustrated in FIG. 8).

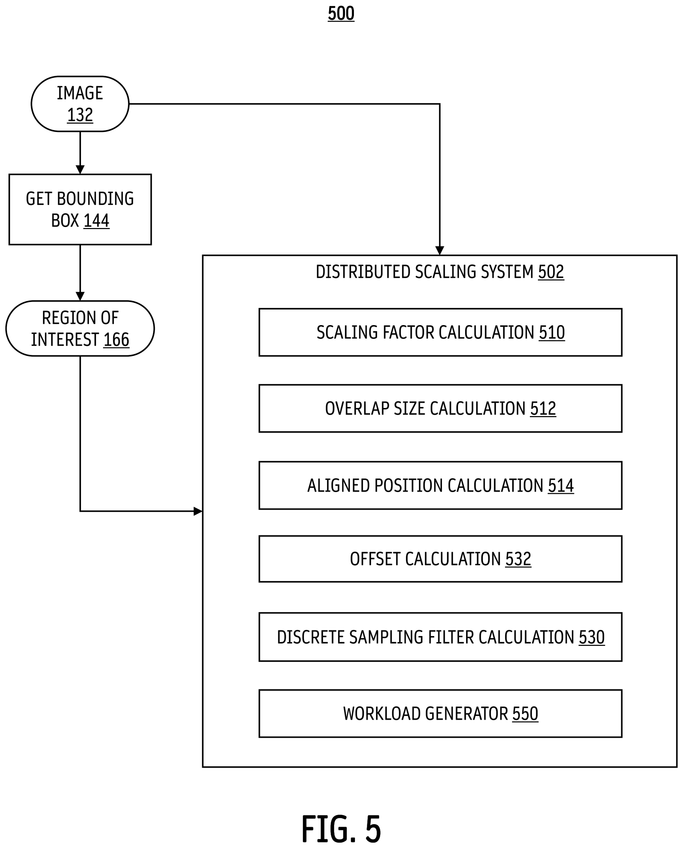

FIG. 5 illustrates distributed scaling of a region of interest, according to some embodiments of the disclosure. FIG. 5 depicts components and data of system 500. In particular, distributed scaling system 502 may receive image 132 and region of interest 166. Distributed scaling system 502 may receive a request to scale region of interest 166 of image 132 (e.g., region of interest 166 of FIG. 1 and depicted in FIGS. 4-5 and 8) from an original dimension to a scaled dimension. Distributed scaling system 502 may produce a scaled image for region of interest 166 that can be consumed by one or more downstream consumers as previously illustrated in FIG. 1.

In one illustrative example, an image may have original dimensions 9216x6912 pixels. A region of interest of the image may have original dimensions of 6480x3520 pixels and may have a top left corner at (1368,1696) and a bottom right corner at (7848,5216) as an example. A request may be received to scale the region of interest from the original dimensions of 6480x3520 pixels to scaled dimensions of 1988x1080. Because the region of interest is relatively large or high-resolution, it may be desirable to divide or partition the region of interest into sub-regions, as illustrated in FIG. 4, and utilize parallel scaler cores to perform scaling of the respective sub-regions in parallel. Distributed scaling system 502 may divide or partition the region of interest into one or more sub-regions. The sub-regions may have an overlap region where two sub-regions may overlap at a transition between the two sub-regions.

Distributed scaling system 502 may include scaling factor calculation 510. Scaling factor calculation 510 may calculate a scaling factor based on the original dimension and the scaled dimension. Calculating the scaling factor may include dividing the original dimension by the scaled dimension. Calculating the scaling factor may include calculating a ratio (or a multiplier) between the original dimension and the scaled dimension. Referring to the illustrative example, the original dimension in the vertical direction is 3520 pixels and the scaled dimension in the vertical direction is 1080. The scaling factor is 3520 / 1080 = 3.259. The scaling factor may be a fractional number, or a non-integer.

In some embodiments, distributed scaling system 502 may determine an overlap size, which ensures that a scaler core has sufficient neighboring pixels for interpolation and application of a scaling filter at the boundary to achieve artifact-free results. The overlap size can be used for determining a memory address for reading and copying pixels of interest 166 by a scaler core to perform scaling of a sub-region. The overlap size may be is a predetermined number or a fixed number that plans for a worst case scenario or largest number of neighboring pixels needed for an expected range of scaling factors. In one example, the overlap size is 32 pixels.

In some embodiments, distributed scaling system 502 may include overlap size calculation 512. Overlap size calculation 512 may calculate an (optimal) overlap size based on the scaling factor and a number of taps of a scaling filter. The overlap size may be a safe margin that offers just enough neighboring pixels for interpolation and application of a scaling filter at the boundary and prevent/avoid unnecessary memory accesses and copying of pixels of the original image that are not used or required for aligned interpolation. Overlap size calculation 512 may calculate the overlap size based on the number of taps in the filter and adjusts for the scaling factor to ensure that a sub-region has enough valid pixels for interpolation. The overlap size calculation can be as follows: $overlapSize = \left⌊\frac{numTaps - 1}{2}∗scalingFactor\right⌋$

*overlapSize* represents the overlap size, *numTaps* is the number of taps of the scaling filter, and *scalingFactor* is the scaling factor (determined by scaling factor calculation 510). $\left⌊⋅\right⌋$ represents a floor operation. Applying the above calculation can ensure that each sub-region has sufficient neighboring pixels to perform accurate interpolation at the boundary between sub-regions and avoid artifacts. In one example, downscaling from an original dimension of 3160 pixels to 540 pixels with a 4x downscale using a scaling filter with 8 taps would result in an overlap size of 14 pixels. In another example, upscaling from an original dimension of 540 pixels to 3160 pixels with a 4x upscale using a scaling filter with 8 taps would result in an overlap size of 1 pixel. By taking the scaling factor and the number of taps of the scaling factor into account, overlap size calculation 512 can enable precise, artifact-free interpolation to be performed across sub-region boundaries with enough valid pixels, enabling effective parallel processing.

Referring briefly to FIG. 4, the overlap region between position 414 and position 416 illustrates a region that can be determined using the overlap size to ensure that the scaling of sub-region 404 has sufficient neighboring pixels to perform interpolation and that the scaling of sub-region 402 has sufficient neighboring pixels to perform interpolation. A scaler core that is scaling sub-region 402 may read and copy pixels between position 412 to position 416. A scaler core that is scaling sub-region 404 may read and copy pixels between position 414 to position 418.

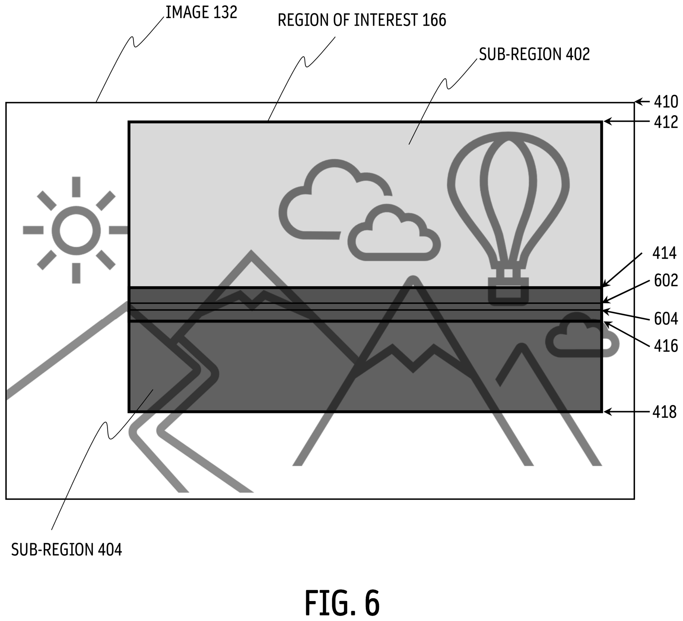

In some embodiments, aligned position calculation 514 may calculate an aligned position. The aligned position for a further sub-region such as sub-region 404 can be based on one or more of: the overlap size, the scaling factor, and an end position of a (previous) sub-region (e.g., sub-region 402). Referring to FIG. 6, because of fractional scaling factors, the actual aligned starting position for scaling sub-region 404 is not always position 414 (the start of sub-region 404). The actual end position for scaling sub-region 402 is not necessarily position 416. The actual starting position for scaling sub-region 404 can be aligned to an end position of sub-region 402.

The aligned position represents an aligned starting position for scaling a (next) sub-region (e.g., a first line or a first column of the next sub-region). Aligned position calculation 514 may calculate an aligned starting position (e.g., a first line or a first column) for sub-region 404 that is aligned to sub-region 402 to ensure that the starting position for sub-region 404 aligns correctly relative to the end position for sub-region 402 in accordance with the scaling factor. Correct alignment and calculation of the aligned position can avoid artifacts at the boundary between sub-region 404 and sub-region 402.

In some implementations, aligned position calculation 514 may calculate the aligned position (e.g., a starting position for sub-region 404, or a first line or column for processing sub-region 404) based on an end position or last processed position of a further/previous sub-region (e.g., a last line or a last column of the previous sub-region). The previous sub-region may refer to sub-region 402 (a top region of region of interest 166), and the (next) sub-region may refer to sub-region 404 (a bottom region of region of interest 166). The aligned position for sub-region 404 can be calculated as follows: $alignedStart = \left(prevEnd+1-overlapSize\right) + \frac{scaleFactor - 1}{2}$

*alignedStart* represents the aligned position for sub-region 404, *overlapSize* is the overlap size (determined by overlap size calculation 512), *prevEnd* is the end position or last processed position (last line or column) of sub-region 402, and *scalingFactor* is the scaling factor (determined by scaling factor calculation 510). *prevEnd* cab refer to a neighbor row or column of sub-region 402. In the illustrative example where the scaling factor is 3.259, the overlap size is 32 pixels, and the end position of a previous sub-region is 3071, the aligned position for the sub-region is 3041.1296. The aligned position for scaling sub-region 404 would be calculated by aligned position calculation 514 based on a last processed line/column of sub-region 402, to ensure that the scaling process of sub-region 404 is consistent with the scaling process of sub-region 402. The aligned position indicates where the processing of scaling sub-region 404 may begin to maintain visual consistency with sub-region 402, according to where processing ended for sub-region 402. A workload for scaling sub-region 404 may be generated by workload generator 550 based on the aligned position.

In some embodiments, offset calculation 532 may calculate an offset based on the aligned position, the scaling factor, and the overlap size. The offset represents an offset to align the first line or first column of sub-region 404 (*alignedStart*) with the scaling factor (*scaleFactor*) so that a scaling filter (e.g., a center of the scaling filter) can be placed at an accurate location to begin scaling and filter tap weights can be adjusted accordingly for discrete sampling. The offset for sub-region 404 can be calculated as follows: $\begin{matrix}offset = \left(\left⌊\frac{alignedStart}{scaleFactor}\right⌋+\left(2-mod2\left(\left⌊\frac{alignedStart}{scaleFactor}\right⌋\right)\right)\right) ∗ scaleFactor \\ - \left(prevEnd+1-overlapSize\right) + \frac{scaleFactor - 1}{2}\end{matrix}$

*offset* represents the offset for sub-region 404, *alignedStart* is the aligned position for sub-region 404 (determined by aligned position calculation 514), *overlapSize* is the overlap size (determined by overlap size calculation 512), *prevEnd* is the end position or last processed position of sub-region 402, and *scalingFactor* is the scaling factor (determined by scaling factor calculation 510). In the illustrative example where the scaling factor is 3.259, the overlap size is 32 pixels, the end position of a previous sub-region is 3071, and the aligned position for the sub-region is 3041.1296, the offset for the sub-region is 5.277. The offset accounts for how the aligned position for scaling sub-region 404 (determined by aligned position calculation 514) is to be adjusted or offset due to the scaling factor. The offset may be used to adjust the number of (previous) rows or columns of pixels to be processed to ensure proper alignment with the scaling of sub-region 402.

The offset aligns the aligned position of sub-region 404 according to the scaling factor, to ensure that the output scaled image maintains consistency with the result of a single-pass process. In particular, the offset is used for determining a center of a scaling filter for the scaler core to start filtering and producing a scaled version for sub-region 404. The center of the scaling filter would be aligned with the scaling process performed for sub-region 402. The offset is also used for determining filter tap weights for the scaling filter for the scaler core to perform interpolation according to the scaling factor. By properly aligning the sub-regions, artifacts are eliminated at the boundary/transition and supports precises scaling across the vertical and horizontal dimensions. A workload for scaling sub-region 404 may be generated by workload generator 550 based on the offset.

In some embodiments, discrete sampling filter calculation 530 may calculate integer and fractional components for the scaling filter to support discrete sampling by the scaling filter based on the offset (determined by offset calculation 532). The input pixels of region of interest 166 being sampled by the scaling filter represent discrete samples. However, the scaling factor may be fractional. When scaling, an output pixel of the scaled image may correspond to a position in the region of interest 166 (e.g., the aligned position) that is not aligned perfectly with the input pixel grid.

Discrete sampling filter calculation 530 may determine filter components that can be used to support discrete sampling of the input samples based on the offset. The sampling filter may utilize the filter components that have been adjusted according to the scaling factor and the offset to sample discrete samples of region of interest 166 to produce output pixels of the scaled image. More importantly, discrete sampling filter calculation 530 may determine the filter components based on the offset determined by offset calculation 532 so that the scaling filter performs processing of sub-region 404 in a manner that is aligned with sub-region 402. The filter components may include integer offset and/or integer phase. The filter components may include a center and one or more filter tap weights of a scaling filter.

In some embodiments, discrete sampling filter calculation 530 may determine an integer offset based on the offset, where the integer offset may correspond to an integer component of the offset. The integer offset may specify a center of a scaling filter (e.g., a particular line of region of interest 166) in the region of interest 166 (e.g., in the input space) to be used by scaling filter as a center of the scaling filter. The integer offset may specify a whole-number position within the grid of input pixels that would serve as the center for the scaling filter for scaling sub-region 404. The integer offset can be calculated as follows: $integer _ offset = \left⌊offset\right⌋$

*integer_offset* represents the integer offset for sub-region 404, and *offset* is the offset for sub-region 404 (determined by offset calculation 532). In the illustrative example where the offset is 5.277, the integer offset is 5. The integer offset is the integer component of the offset, representing whole-pixel alignment of the sampling filter. A workload for scaling sub-region 404 may be generated by workload generator 550 based on the integer offset.

In some embodiments, discrete sampling filter calculation 530 may determine integer phase based on the offset, where the integer phase may correspond to a fractional component of the offset. The fractional component may be quantized into discrete steps based on the number of available phases. Using the integer phase, discrete sampling filter calculation 530 may determine one or more weights of one or more taps of a scaling filter. The integer phase can be calculated as follows: $integer _ phase = \left(offset-\left⌊offset\right⌋+\frac{0.5}{numPhases}\right) ∗ \left(numPhases-1\right)$

*integer_phase* represents the integer phase for sub-region 404, *offset* is the offset for sub-region 404 (determined by offset calculation 532), and *numPhases* is the number of discrete phases available for interpolation or sampling. *numPhases* may depend on a precision of the scaling filter, and can range from 32 (e.g., 5 bits), to 65536 (e.g., 16 bits). The integer phase can be used to determine the one or more weights of the one or more taps of a scaling filter. A workload for scaling sub-region 404 may be generated by workload generator 550 based on the one or more weights.

Discrete sampling filter calculation 530 may perform calculations for filter components of the scaling filter to ensure precise alignment of the scaling process of sub-region 404 to sub-region 402, accounting for sub-pixel adjustments. The filter components are calculated based on the offset (determined by offset calculation 532), which means that the scaling filter would be able to perform scaling seamlessly across transitions and minimizes artifacts at the boundary during distributed scaling.

FIG. 6 illustrates distributed scaling of sub-region 402 and the sub-region 404 of the region of interest, according to some embodiments of the disclosure. Position 602 represents the (first) center location of a scaling filter that is scaling sub-region 404. Position 604 represents the (last) center location of a scaling filter that is scaling sub-region 402. Because position 604 is greater than position 602, it is understood from this example that sub-region 402 overlaps with sub-region 404. Scaling of sub-region 402 may be performed beyond position 414, which is the start of sub-region 404. Scaling of sub-region 404 may be performed beyond position 416, which is the end of sub-region 402.

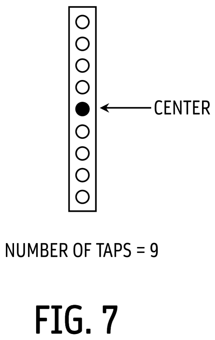

FIG. 7 illustrates an exemplary scaling filter, according to some embodiments of the disclosure. The depicted scaling filter, as an example, has N=9 taps having respective filter tap weights. The scaling filter may have a center. In some cases, the center is co-located with a center tap. In some cases, the center is a center position or point of the scaling filter (and not co-located with a center tap). The scaling filter may be a one-dimensional interpolation scaling filter that operates on discrete samples (i.e., pixels of the region of interest being scaled). The scaling filter may calculate an output pixel of a scaled image as a weighted sum of the discrete pixels. The scaling filter may be characterized by its center and tap weights. The center of the scaling filter can specify the position where the interpolated output pixel is computed. The center of the scaling filter can specify which input pixels are used for the interpolation. The center of the scaling filter, or the position can be based on the offset (determined by offset calculation 532 of FIG. 5). The filter tap weights can be based on the offset (determined by offset calculation 532 of FIG. 5).

For a one-dimensional scaling operation, the center can be defined as a fractional position between input samples. The scaling filter may include N taps (such as N=9), where each tap corresponds to an input pixel that contributes to the interpolated output pixel. An interpolated output pixel at position x can be calculated by: y(x) = Σ(wᵢ × sᵢ), where wᵢ is the weight for the i-th tap, and sᵢ is the input sample at the i-th tap position. The interpolated output pixel may be a weighted sum of the input pixels. This weighted sum effectively combines the information from multiple input pixels to estimate the signal value at the desired output position, providing a continuous representation of the discrete input signal.

The taps can be positioned at integer distances relative to the center. For a filter with N taps, the tap positions can be represented as: p₁, p₂,..., p_{N}. Each tap can be associated with a weight that determines the input pixel's contribution to the final output pixel. The weights can be derived from an interpolation kernel function h(x) and depend on the distance between the tap position and the center: ${w}_{1} = h \left({p}_{1}-α\right)$ ${w}_{2} = h \left({p}_{2}-α\right)$ ...${w}_{N} = h \left({p}_{N}-α\right)$

α may be determined based on the offset (determined by offset calculation 532 of FIG. 5). In particular, α may correspond to the offset - floor(offset). The tap filter weights, wᵢ can be designed to satisfy specific properties. For example, one property includes summing to unity: Σwᵢ = 1 (ensuring signal amplitude preservation). Another property may include symmetry around the center (for linear phase response).

One notable property of the scaling filter is that the center of the scaling filter is not always aligned with the input pixel grid or is offset from the input pixel grid. In one example, when upscaling an input image, an output pixel may be calculated at a center of 2.37 when the input image has pixels at integer positions 2 and 3. In other words, the center is a fractional position. Scaling a next sub-region at an appropriate center would take into account the offset (determined by offset calculation 532 of FIG. 5) to ensure that scaling of the next sub-region is aligned with the previous sub-region.

Another notable property of the scaling filter is that an output pixel is based on a number of input pixels that are on both sides and next to the center of the scaling filter. An overlap region is used to make sure that pixels are available for interpolation at the (first) center for the scaling filter for scaling the next sub-region. The overlap size can be determined based on the number of taps of the scaling filter and the scaling factor.

Yet another notable property of the scaling filter is that the filter weights are dependent on the offset. A fractional component (e.g., the integer phase or *integer_phase*) determines the filter tap weights (which can be a function of a distance between the tap and the fractional center of the scaling filter).

Because the scaling factor is unknown a priori and is likely a non-integer and the scaling filter is to be aligned at the boundary/transition between sub-regions, the center of the scaling filter and the filter tap weights for the next sub-region are carefully calculated and aligned to the scaling process being performed for previous sub-region. Alignment of the center of the scaling filter (and determination of which input pixels to use for interpolation) and the tabulation of appropriate filter tap weights allow scaling of the next sub-region to pick up precisely where the scaling of the previous sub-region left off. Alignment enables the output pixels generated as a result of scaling the next sub-region to be appended directly to the output pixels generated as a result of scaling the previous sub-region.

The center of the scaling filter (or which input pixels to use for interpolation) can be calculated based on the integer offset, or *integer_offset.* The integer offset determines which input samples are accessed by the filter taps.

The filter tap weights can be calculated/determined based on the integer phase. The fractional position (mapped to an integer phase) determines the filter tap weights. In a polyphase implementation, the continuous range of possible fractional positions can be quantized into a finite set of phases (based on the number of phases). For each integer phase, a set of filter tap weights can be pre-computed and stored. Depending on the integer phase, different sets of different tap weights can be selected and applied.

For simplicity, some passages herein are focused on a one-dimensional scaling filter operating on pixels along the vertical dimension. It is envisioned that the same approach can be applied to calculate alignment information for applying a one-dimensional scaling filter that operates on pixels along the horizontal dimension, or a two-dimensional scaling filter that operates on pixels along both the vertical dimension and the horizontal dimension.

### Methods for distributed image scaling

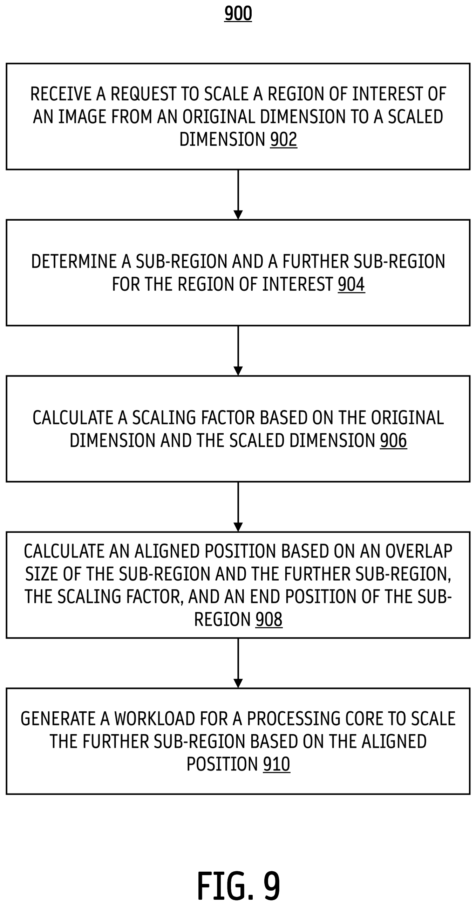

FIG. 9 depicts a flow diagram illustrating method 900 for distributed image scaling, according to some embodiments of the disclosure. Method 900 may be performed by one or more components of distributed scaling system 502 of FIG. 5.

In 902, a request to scale a region of interest of an image from an original dimension to a scaled dimension is received.

In 904, a sub-region and a further sub-region are determined for the region of interest.

In 906, a scaling factor is calculated based on the original dimension and the scaled dimension.

In 908, an aligned position is calculated based on an overlap size of the sub-region and the further sub-region, the scaling factor, and an end position of the sub-region.

In 910, a workload for a processing core to scale the further sub-region based on the aligned position is generated.

In some embodiments, the sub-region overlaps with the further sub-region, according to an overlap size.

In some embodiments, a further workload for a further processing core to scale the sub-region of the one or more sub-regions can be generated.

In some embodiments, the region of interest represents a subset of pixels of the image.

In some embodiments, calculating the scaling factor comprises calculating a ratio between the original dimension and the scaled dimension.

In some embodiments, the scaling factor is a fractional number.

In some embodiments, method 900 may further include calculating an offset based on the aligned position, the scaling factor, and the overlap size.

In some embodiments, method 900 may further include determining an integer offset based on the offset, the integer offset specifying a center of a scaling filter. The workload is generated further based on the integer offset.

In some embodiments, method 900 may further include determining one or more weights of one or more taps of a scaling filter based on the offset. The workload is generated further based on the one or more weights.

In some embodiments, method 900 may further include calculating the overlap size based on the scaling factor and a number of taps of a scaling filter.

### Summaries of various resizing/scaling algorithms

Described embodiments are applicable for a wide range of scaling filters that perform sampling and/or interpolation of neighboring pixels. Examples of scaling filters can include:
- Bilinear: Uses linear interpolation in both dimensions (e.g., in a 2x2 pixel neighborhood).
- Bilinear Nyquist: Similar to bilinear, but with additional filtering to prevent aliasing.
- Nearest Neighbor: Simple and fast. Selects the closest pixel value. Produces blocky, pixelated results without smoothing. Can result in a blocky appearance.
- Bicubic: Uses cubic interpolation in both dimensions (e.g., over a 4x4 pixel neighborhood), generally producing smoother results with better edge preservation, though ringing artifacts may be introduced.
- Lanczos: Employs a windowed Sinc function for high-quality downscaling that maintains details and sharp edges, but can cause ringing.
- Gaussian: Applies a Gaussian function for smooth interpolation.
- Average Area: Averages pixel values in the source area corresponding to each destination pixel.
- Sinc: Uses the Sinc function for interpolation.
- Spline: Utilizes polynomial spline functions for smooth interpolation.
- Fourier-based: Operates in the frequency domain, allowing for precise control over frequency components.
- Edge-directed: Adapts interpolation based on edge detection to preserve sharpness.
- Pixel art scaling: Specialized algorithms for scaling pixel art while preserving its distinct style.
- Image tracing: Converts raster images to vector graphics before scaling.
- Neural network based: Uses machine learning models to intelligently upscale images.
- Box sampling: Averaging of source pixels within a box region.
- Mitchell-Netravali: A cubic filter designed to balance between sharpness and ringing artifacts.
- Super-sampling: Creates a higher resolution image and then downscales to reduce aliasing.
- Sub-sampling: Reduces image size by selecting a subset of pixels.
- Seam carving: Content-aware resizing that removes or duplicates paths of pixels (seams) based on importance.

### Exemplary computing device

FIG. 10 is a block diagram of an apparatus or a system, e.g., an exemplary computing device 1000, according to some embodiments of the disclosure. One or more computing devices 1000 may be used to implement the functionalities described with the FIGS. and herein. A number of components are illustrated in FIG. 10 can be included in the computing device 1000, but any one or more of these components may be omitted or duplicated, as suitable for the application. In some embodiments, some or all of the components included in the computing device 1000 may be attached to one or more motherboards. In some embodiments, some or all of these components are fabricated onto a single system on a chip (SoC) die. Additionally, in various embodiments, the computing device 1000 may not include one or more of the components illustrated in FIG. 10, and the computing device 1000 may include interface circuitry for coupling to the one or more components. For example, the computing device 1000 may not include a display device 1006, and may include display device interface circuitry (e.g., a connector and driver circuitry) to which a display device 1006 may be coupled. In another set of examples, the computing device 1000 may not include an audio input device 1018 or an audio output device 1008 and may include audio input or output device interface circuitry (e.g., connectors and supporting circuitry) to which an audio input device 1018 or audio output device 1008 may be coupled.

The computing device 1000 may include a processing device 1002 (e.g., one or more processing devices, one or more of the same type of processing device, one or more of different types of processing device). The processing device 1002 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1002 may include a central processing unit (CPU), a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1000 may include a memory 1004, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1004 includes one or more non-transitory computer-readable storage media. In some embodiments, memory 1004 may include memory that shares a die with the processing device 1002.

In some embodiments, memory 1004 includes one or more non-transitory computer-readable media storing instructions executable to perform operations described herein, such as operations illustrated in FIGS. 1, 5, and 9. In some embodiments, memory 1004 includes one or more non-transitory computer-readable media storing instructions executable to perform one or more operations of methods described herein, such as method 900. In some embodiments, memory 1004 includes one or more non-transitory computer-readable media storing instructions executable to perform one or more operations of components in system 100. In some embodiments, memory 1004 includes one or more non-transitory computer-readable media storing instructions executable to perform one or more operations of components in system 500. The instructions stored in memory 1004 may be executed by processing device 1002.

In some embodiments, memory 1004 may store data, e.g., data structures, binary data, bits, metadata, files, blobs, etc., as described with the FIGS. and herein. Memory 1004 may include one or more non-transitory computer-readable media storing one or more of: data received and/or data generated in system 100. Memory 1004 may include one or more non-transitory computer-readable media storing one or more of: data received and/or data generated in system 500. Other data not explicitly shown in FIG. 10 that may be stored in memory 1004 may include one or more of: one or more images 132, one or more training outputs 110, one or more inference outputs 140, region of interest 166, alignment information (aligned position, offset, integer offset, integer phase, overlap size, etc.), filter components of scaling filter, and scaled images, etc.

In some embodiments, memory 1004 may store one or more machine learning models (or parts thereof). An example of a machine learning model includes get bounding box 144 of FIGS. 1 and 5.. An example of a machine learning model includes model 106 of FIG. 1. Memory 1004 may store training data for training a machine learning model. Memory 1004 may store instructions that perform operations associated with training a machine learning model. Memory 1004 may store input data, output data, intermediate outputs, intermediate inputs of one or more machine learning models. Memory 1004 may store one or more parameters used by the one or more machine learning models. Memory 1004 may store information that encodes how nodes or parts of the one or more machine learning models are connected with each other. Memory 1004 may store instructions (e.g., low-level machine code) to perform one or more operations of the one or more machine learning models. Memory 1004 may store a model definition that specifies one or more operations of a machine learning model.

In some embodiments, the computing device 1000 may include a communication device 1012 (e.g., one or more communication devices). For example, the communication device 1012 may be configured for managing wired and/or wireless communications for the transfer of data to and from the computing device 1000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1012 may operate in accordance with other wireless protocols in other embodiments. The computing device 1000 may include an antenna 1022 to facilitate wireless communications and/or to receive other wireless communications (such as radio frequency transmissions). Computing device 1000 may include receiver circuits and/or transmitter circuits. In some embodiments, the communication device 1012 may manage wired communications, such as electrical, optical, or any other suitable communication protocols (e.g., the Ethernet). As noted above, the communication device 1012 may include multiple communication chips. For instance, a first communication device 1012 may be dedicated to shorter-range wireless communications such as Wi-Fi or Bluetooth, and a second communication device 1012 may be dedicated to longer-range wireless communications such as global positioning system (GPS), EDGE, GPRS, CDMA, WiMAX, LTE, EV-DO, or others. In some embodiments, a first communication device 1012 may be dedicated to wireless communications, and a second communication device 1012 may be dedicated to wired communications.

The computing device 1000 may include power source / power circuitry 1014. The power source / power circuitry 1014 may include one or more energy storage devices (e.g., batteries or capacitors) and/or circuitry for coupling components of the computing device 1000 to an energy source separate from the computing device 1000 (e.g., DC power, AC power, etc.).

The computing device 1000 may include a display device 1006 (or corresponding interface circuitry, as discussed above). The display device 1006 may include any visual indicators, such as a heads-up display, a computer monitor, a projector, a touchscreen display, a liquid crystal display (LCD), a light-emitting diode display, or a flat panel display, for example.

The computing device 1000 may include an audio output device 1008 (or corresponding interface circuitry, as discussed above). The audio output device 1008 may include any device that generates an audible indicator, such as speakers, headsets, or earbuds, for example.

The computing device 1000 may include an audio input device 1018 (or corresponding interface circuitry, as discussed above). The audio input device 1018 may include any device that generates a signal representative of a sound, such as microphones, microphone arrays, or digital instruments (e.g., instruments having a musical instrument digital interface (MIDI) output).

The computing device 1000 may include a GPS device 1016 (or corresponding interface circuitry, as discussed above). The GPS device 1016 may be in communication with a satellite-based system and may receive a location of the computing device 1000, as known in the art.

The computing device 1000 may include a sensor 1030 (or one or more sensors). The computing device 1000 may include corresponding interface circuitry, as discussed above). Sensor 1030 may sense physical phenomenon and translate the physical phenomenon into electrical signals that can be processed by, e.g., processing device 1002. Examples of sensor 1030 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1000 may include another output device 1010 (or corresponding interface circuitry, as discussed above). Examples of the other output device 1010 may include an audio codec, a video codec, a printer, a wired or wireless transmitter for providing information to other devices, haptic output device, gas output device, vibrational output device, lighting output device, home automation controller, or an additional storage device.

The computing device 1000 may include another input device 1020 (or corresponding interface circuitry, as discussed above). Examples of the other input device 1020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1000 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1000 may be any other electronic device that processes data.

### Select examples

Example 1 provides a method, including receiving a request to scale a region of interest of an image from an original dimension to a scaled dimension; determining a sub-region and a further sub-region for the region of interest; calculating a scaling factor based on the original dimension and the scaled dimension; calculating an aligned position based on an overlap size of the sub-region and the further sub-region, the scaling factor, and an end position of the sub-region; and generating a workload for a processing core to scale the further sub-region based on the aligned position.

Example 2 provides the method of example 1, further including generating a further workload for a further processing core to scale the sub-region.

Example 3 provides the method of example 1 or 2, where the region of interest represents a subset of pixels of the image.

Example 4 provides the method of any one of examples 1-3, where calculating the scaling factor includes calculating a ratio between the original dimension and the scaled dimension.

Example 5 provides the method of any one of examples 1-4, where the scaling factor is a fractional number.

Example 6 provides the method of any one of examples 1-5, further including calculating an offset based on the aligned position, the scaling factor, and the overlap size.

Example 7 provides the method of example 6, further including determining an integer offset based on the offset, the integer offset specifying a center of a scaling filter; where the workload is generated further based on the integer offset.

Example 8 provides the method of example 6 or 7, further including determining one or more weights of one or more taps of a scaling filter based on the offset; where the workload is generated further based on the one or more weights.

Example 9 provides the method of any one of examples 1-8, further including calculating the overlap size based on the scaling factor and a number of taps of a scaling filter.

Example 10 provides one or more non-transitory computer-readable media storing instructions that, when executed by one or more processors, cause the one or more processors to: receive a request to scale a region of interest of an image from an original dimension to a scaled dimension; determine a sub-region and a further sub-region for the region of interest; calculate a scaling factor based on the original dimension and the scaled dimension; calculate an aligned position based on an overlap size of the sub-region and the further sub-region, the scaling factor, and an end position of the sub-region; and generate a workload for a processing core to scale the further sub-region based on the aligned position.

Example 11 provides the one or more non-transitory computer-readable media of example 10, where the instructions further cause the one or more processors to: generate a further workload for a further processing core to scale the sub-region.

Example 12 provides the one or more non-transitory computer-readable media of example 10 or 11, where the region of interest represents a subset of pixels of the image.

Example 13 provides the one or more non-transitory computer-readable media of any one of examples 10-12, where calculating the scaling factor includes calculating a ratio between the original dimension and the scaled dimension.

Example 14 provides the one or more non-transitory computer-readable media of any one of examples 10-13, where the scaling factor is a fractional number.

Example 15 provides the one or more non-transitory computer-readable media of any one of examples 10-14, where the instructions further cause the one or more processors to: calculate an offset based on the aligned position, the scaling factor, and the overlap size.

Example 16 provides the one or more non-transitory computer-readable media of example 15, where the instructions further cause the one or more processors to: determine an integer offset based on the offset, the integer offset specifying a center of a scaling filter; where the workload is generated further based on the integer offset.

Example 17 provides the one or more non-transitory computer-readable media of example 15 or 16, where the instructions further cause the one or more processors to determine one or more weights of one or more taps of a scaling filter based on the offset, and the workload is generated further based on the one or more weights.

Example 18 provides the one or more non-transitory computer-readable media of any one of examples 10-17, where the instructions further cause the one or more processors to: calculate the overlap size based on the scaling factor and a number of taps of a scaling filter.

Example 19 provides an apparatus, including one or more processors; and one or more non-transitory computer-readable media storing instructions that, when executed by the one or more processors, cause the one or more processors to: receive a request to scale a region of interest of an image from an original dimension to a scaled dimension; determine a sub-region and a further sub-region for the region of interest; calculate a scaling factor based on the original dimension and the scaled dimension; calculate an aligned position based on an overlap size of the sub-region and the further sub-region, the scaling factor, and an end position of the sub-region; and generate a workload for a processing core to scale the further sub-region based on the aligned position.

Example 20 provides the apparatus of example 19, where the instructions further cause the one or more processors to: generate a further workload for a further processing core to scale the sub-region.

Example 21 provides the apparatus of example 19 or 20, where the region of interest represents a subset of pixels of the image.

Example 22 provides the apparatus of any one of examples 19-21, where calculating the scaling factor includes calculating a ratio between the original dimension and the scaled dimension.

Example 23 provides the apparatus of any one of examples 19-22, where the scaling factor is a fractional number.

Example 24 provides the apparatus of any one of examples 19-23, where the instructions further cause the one or more processors to: calculate an offset based on the aligned position, the scaling factor, and the overlap size.

Example 25 provides the apparatus of example 24, where the instructions further cause the one or more processors to: determine an integer offset based on the offset, the integer offset specifying a center of a scaling filter; where the workload is generated further based on the integer offset.

Example 26 provides the apparatus of example 24 or 25, where the instructions further cause the one or more processors to determine one or more weights of one or more taps of a scaling filter based on the offset, and the workload is generated further based on the one or more weights.

Example 27 provides the apparatus of any one of examples 19-26, where the instructions further cause the one or more processors to: calculate the overlap size based on the scaling factor and a number of taps of a scaling filter.

Example A provides a computer program product comprising instructions, that when executed by a processor, causes the processor to perform a method of any one of examples 1-9.

Example B provides an apparatus comprising means for performing a method of any one of examples 1-9.

Example C provides one or more components of a distributed scaling system as described and illustrated herein.

Example D provides a processor having one or more processing cores for scaling, the one or more processing cores implementing one or more operations for distributed scaling of a region of interest of an image as described and illustrated herein.

### Variations and other notes

Although the operations of the example method shown in and described with reference to FIGS. 5 and 9 are illustrated as occurring once each and in a particular order, it will be recognized that some operations may be performed in any suitable order and repeated as desired. Furthermore, the operations illustrated in FIGS. 5 and 9 or other FIGS. may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
receiving a request to scale a region of interest of an image from an original dimension to a scaled dimension;
determining a sub-region and a further sub-region for the region of interest;
calculating a scaling factor based on the original dimension and the scaled dimension;
calculating an aligned position based on an overlap size of the sub-region and the further sub-region, the scaling factor, and an end position of the sub-region; and
generating a workload for a processing core to scale the further sub-region based on the aligned position.

2. The method of claim 1, further comprising:
generating a further workload for a further processing core to scale the sub-region.

3. The method of claim 1 or 2, wherein the region of interest represents a subset of pixels of the image.

4. The method of any one of claims 1-3, wherein calculating the scaling factor comprises calculating a ratio between the original dimension and the scaled dimension.

5. The method of any one of claims 1-4, wherein the scaling factor is a fractional number.

6. The method of any one of claims 1-5, further comprising:
calculating an offset based on the aligned position, the scaling factor, and the overlap size.

7. The method of claim 6, further comprising:
determining an integer offset based on the offset, the integer offset specifying a center of a scaling filter;
wherein the workload is generated further based on the integer offset.

8. The method of claim 6 or 7, further comprising:
determining one or more weights of one or more taps of a scaling filter based on the offset;
wherein the workload is generated further based on the one or more weights.

9. The method of any one of claims 1-8, further comprising:
calculating the overlap size based on the scaling factor and a number of taps of a scaling filter.

10. One or more non-transitory computer-readable media storing instructions that, when executed by one or more processors, cause the one or more processors to perform a method according to any one of claims 1-9.

11. An apparatus, comprising:
one or more processors; and
one or more non-transitory computer-readable media storing instructions that, when executed by the one or more processors, cause the one or more processors to perform a method according to any one of claims 1-9.

12. An apparatus comprising means for performing a method of any one of examples 1-9.
